# FASCICULE DE BREVET EUROPEEN

(11) **EP 1 206 357 B1**
(45) Date de publication et mention de la délivrance du brevet: **13.10.2004**
(21) Numéro de dépôt: 00949335.4
(22) Date de dépôt: 13.07.2000
(51) Int. Cl.: B60B 21/10, B60B 21/02, B60C 15/02, B60C 17/06

(54) **ENSEMBLE D'UNE JANTE ET D'UN APPUI DE SOUTIEN**
FELGE UND UNTERSTÜTZUNGSVORRICHTUNG
RIM AND SUPPORTING ELEMENT ASSEMBLY

(30) Priorité: 02.08.1999 FR 9910108
(43) Date de publication de la demande: 22.05.2002
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: POMPIER, Jean-Pierre, F-63530 Volvic (FR)
(74) Mandataire: Diernaz, Christian
(86) Numéro de dépôt international: PCT/EP2000/006702
(87) Numéro de publication internationale: WO 2001/008905

(56) Documents cités:
- EP-A- 0 807 539
- EP-B- 0 673 324
- FR-A- 2 713 558
- US-A- 4 561 482
- US-A- 5 787 950

## Description

La présente invention concerne un ensemble formé d'une roue ou d'une jante monobloc de montage d'un pneumatique, et d'un anneau de soutien de bande de roulement, ensemble se voulant particulièrement utile dans le cas d'un roulage d'un pneumatique où la pression de gonflage s'abaisse anormalement par rapport à la pression recommandée, la dite pression de service pouvant devenir nulle. Elle concerne aussi la jante de montage en tant que telle , ainsi que l'appui de soutien de bande de roulement en tant que tel.

Les principales difficultés rencontrées dans le cas d'un roulage à plat ou à pression faible concernent les risques de décoincement des bourrelets du pneumatique et en particulier le décoincement du bourrelet situé du côté extérieur du pneumatique monté du côté extérieur du véhicule. Les techniques proposées et bien connues pour éviter de tels décoincements, et en particulier celle consistant à disposer axialement à l'intérieur du siège extérieur de jante une saillie ou hump de faible hauteur, ne semblent pas donner entière satisfaction et tendent à augmenter les difficultés de montage et de démontage des pneumatiques.

Le brevet EP 0 673 324 décrit, en vue de remédier aux difficultés ci-dessus, un ensemble roulant composé d'un pneumatique et comprenant une jante monobloc avec deux sièges de jante dits inclinés vers l'extérieur et prolongés axialement vers l'extérieur par deux saillies ou humps de faible hauteur. Le siège du bord de jante qui sera situé à l'extérieur du véhicule est prolongé axialement vers l'intérieur par une portée destinée et adaptée à recevoir un appui de soutien de bande de roulement, alors que le siège situé du côté intérieur véhicule est prolongé axialement vers l'intérieur par un rebord de jante, rebord relié à la portée par l'intermédiaire d'une gorge de montage. La variante préférentielle de ladite jante comporte deux sièges inclinés vers l'extérieur et de diamètres inégaux, le siège situé du côté extérieur véhicule ayant un diamètre inférieur au diamètre du siège situé du côté intérieur du véhicule. L'appui de soutien de l'ensemble est un appui en matériau élastomérique déformable de manière élastique, ovalisable, et enfilable sur la portée. Ledit appui de soutien de bande de roulement, comme son nom l'indique à empêcher l'affaissement de la bande de roulement et permettre ainsi au pneumatique de rouler sous une flèche acceptable malgré le manque ou l'absence de gaz de gonflage, tout en maintenant fermement le bourrelet extérieur du pneumatique en position sur son siège de jante.

Bien que représentant un énorme progrès par rapport aux systèmes connus pour des roulages, que nous dénommons roulages en mode dégradé, tout en permettant d'excellentes performances en roulage normal, l'ensemble décrit ci-dessus a un inconvénient majeur, qui est celui d'être lourd.

En vue d'une diminution conséquente de poids, il est possible d'agir efficacement sur les deux éléments de l'ensemble que sont la jante et l'appui de soutien. Les demandes européenne EP 0 807 539 et française FR 98/09387 (FR-A-2 781 184) décrivent de telles jantes allégées qui comportent soit une portée munie de nombreux évidements, soit une portée se résumant à deux zones d'appui circonférentielles séparées axialement par une gorge circonférentielle. Quant à l'appui, il a été allégé de manière significative par le remplacement d'une grande partie du corps plein, entre la base et le sommet dudit appui par de nombreux évidements séparés par des cloisons pleines, de forme et position adaptées. Les demandes françaises FR 98/14244 (EP-A-1000774) et FR 99/07469 (FR-A-2794686) décrivent de tels appuis, utilisés aussi pour bloquer au moins le bourrelet de pneumatique monté sur le siège de jante situé du côté extérieur du véhicule et de plus petit diamètre. Le document EP-A-0 807 539 montre un ensemble selon le préambule de la revendication 1, dont l'angle α est environ 65°.

Le brevet US 5787950 de la demanderesse montre une jante dont les sièges sont inclinés vers l'extérieur et comportant une portée destinée à recevoir un appui de soutien ayant la même largeur. Cette dernière caractéristique assure que le bourrelet du pneumatique prévu pour être placé sur ce siège est effectivement maintenu axialement par l'appui de soutien afin d'empêcher tout risque de décoincement dudit bourrelet.

L'invention a pour objet un ensemble, formé d'une jante et d'un appui de soutien, encore allégé par rapport aux réalisations précédentes, sans cependant déprécier les qualités fondamentales des dits ensembles connus qui sont d'éviter le décoincement des bourrelets du pneumatique tout en permettant un montage facile dudit pneumatique sur jante, quelque soit le type de fabrication de la jante de montage, et la conservation de l'intégrité dudit pneumatique malgré un roulage sous faible pression, voire nulle.

Ce but est atteint grâce aux caractéristiques définies dans revendication 1.

Il faut entendre par parois concentriques des parois sous forme de surfaces de révolution ayant le même axe de révolution et distantes l'une de l'autre d'une valeur constante.

Il faut entendre par diamètre minimum de la portée de jante, mesuré dans le plan parallèle au plan équatorial contenant l'extrémité de ladite portée la plus proche du premier siège de jante, la distance maximale séparant deux points diamétralement opposés de ladite extrémité circulaire.

Il faut entendre par saillie de faible hauteur, compte tenu des dimensions de jantes concernées et des dimensions de pneumatiques appelés à être montés sur les dites jantes, une saillie dont la hauteur est au plus égale à 2,5% du diamètre minimum de la portée de jante.

La rainure circonférentielle peut être relativement de grandes dimensions, et être, par exemple, la gorge circonférentielle qui divise la portée en deux zones d'appui circonférentielles et telle que décrite dans la demande FR 98/09387. Une protubérance de l'appui vient alors axialement en contact avec et en butée contre une seule des parois de la rainure circonférentielle.

La rainure circonférentielle peut aussi être de faibles dimensions axiale et radiale, les dites dimensions étant comprises entre 0,01 et 0,015 fois le diamètre de la portée d'appui. La protubérance dudit appui vient alors se loger dans ladite rainure en butée contre les deux parois latérales de la rainure.

L'invention sera mieux comprise à l'aide du dessin annexé à la description illustrant des exemples non limitatifs d'exécution d'un ensemble d'une jante et d'un appui de soutien pour montage d'un pneumatique, dessin sur lequel :
- la figure 1 représente schématiquement, vu en section méridienne, un premier ensemble conforme à l'invention,
- la figure 2 représente de la même manière une deuxième variante d'ensemble conforme à l'invention,
- la figure 3 montre une deuxième variante de l'ensemble de la figure 2, les différences portant sur l'appui,
- la figure 4 montre une troisième variante de l'ensemble, l'appui comprenant deux protubérances.

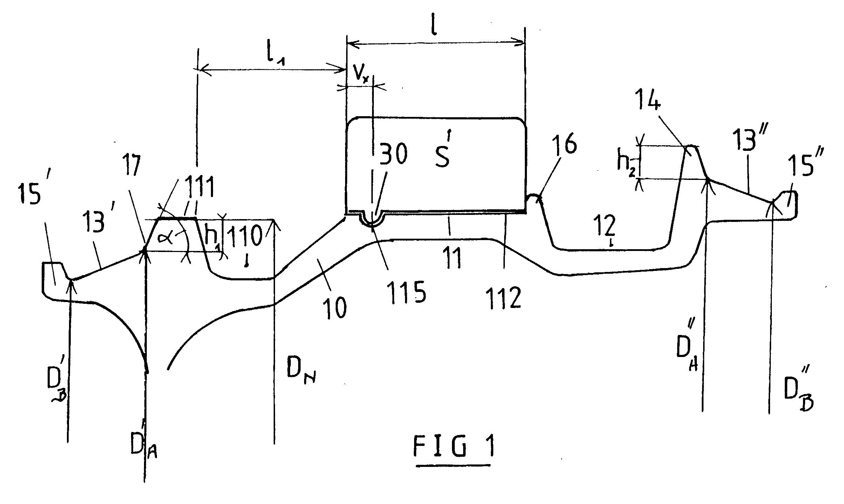

Sur la figure 1 est montrée, vue en section méridienne, une jante monobloc telle que divulguée dans la demande de brevet FR 98/09837, en sachant que la jante peut former avec un disque une roue monobloc ou que le disque peut être fabriqué indépendamment de la jante et réuni à ladite jante par la suite. La jante 10 comprend deux sièges de jante tronconiques 13' et 13" de diamètres inégaux respectivement D'_{A} et D"_{A}. Il faut entendre par diamètre d'un siège tronconique le diamètre de son extrémité circulaire la plus grande. Les génératrices des deux sièges 13' et 13" sont inclinées vers le premier et vers le deuxième bord de la jante, les diamètres D'_{A} et D"_{A} respectivement de leurs extrémités axialement intérieures étant plus grands que les diamètres D'_{B} et D"_{B} de leurs extrémités axialement extérieures. Lesdits deux sièges tronconiques sont prolongés axialement vers l'extérieur par deux saillies ou humps 15' et 15" dont la hauteur, mesurée perpendiculairement à l'axe de rotation, est égale à 4 mm. Le premier siège 13', destiné à être monté du côté extérieur du véhicule qui sera équipé de tels ensembles, est axialement à l'intérieur prolongé par une partie tronconique 17 dont la génératrice fait avec une parallèle à l'axe de rotation un angle α ouvert axialement vers l'intérieur et radialement vers l'extérieur de 70° et dont la hauteur h₁ mesurée perpendiculairement à l'axe de rotation est égale à 4,5 mm. L'extrémité axialement intérieure de ladite génératrice est aussi extrémité de la portée de jante 11, située axialement du côté extérieur du véhicule. Ladite portée est constituée de deux zones d'appui 111 et 112 séparées par une première rainure circonférentielle 110 et la largeur L de la portée est la distance axiale séparant l'extrémité axialement extérieure de la zone d'appui 111 et l'extrémité axialement extérieure de la zone d'appui 112. La zone d'appui 112, la plus proche axialement du deuxième siège de jante 13" destiné à être monté du côté intérieur du véhicule, a son extrémité la plus proche dudit siège 13" pourvue d'une saillie ou butée de positionnement 16, destinée à éviter le déplacement axial vers l'intérieur de l'appui de soutien S de bande de roulement qui sera disposé sur la portée de jante 11. Le deuxième siège 13" est prolongé axialement vers l'intérieur par un rebord 14 de hauteur h₂ égale à 4,5 mm, c'est-à-dire égale à la hauteur h₁ définie ci-dessus. Ledit rebord 14 délimite avec la butée de positionnement 16 une gorge de montage 12 pour la mise en place du bourrelet de pneumatique qui sera monté sur le siège 13".

La portée 11 est pourvue sur la face radialement supérieure de la zone d'appui 112 d'une deuxième rainure circonférentielle 115 se présentant, vue en section méridienne, sensiblement sous la forme d'un demi-cercle de faible rayon égal à 4,5 mm surmontant un rectangle de faible hauteur, la hauteur de la rainure étant sensiblement de même valeur que la hauteur d'une saillie 15'(15"). De manière préférentielle, les intersections de la rainure 115 avec la face de la zone d'appui 112 sont chanfreinées par de légers arrondis pour blesser le moins possible la protubérance 30, située sur la face radialement inférieure de l'appui S de soutien de bande de roulement, de même forme et de même dimension, afin de pouvoir se loger facilement dans la rainure 115. L'appui S en matière caoutchouteuse possède une largeur axiale 1 très nettement inférieure à la largeur axiale L de la portée 11, puisqu'égale dans l'exemple considéré à 0,6 L. La largeur 1 de l'appui de soutien S peut avantageusement être, dans le cas de la présence de la première rainure circonférentielle 110, supérieure à la largeur l₁ de ladite rainure. La protubérance 30 est constituée de la même matière caoutchouteuse que celle de l'appui et peut être renforcée ou non. Dans le cas où elle est renforcée, elle le sera préférentiellement par un fil élastique continu circonférentiellement ou un toron continu de plusieurs fils élastique, c'est-à-dire présentant un certain allongement sous contrainte d'élongation et retrouvant sa forme initiale dès disparition de la contrainte. Elle pourra être renforcée par des tronçons de fil ou toron inextensible, séparés circonférentiellement par le caoutchouc formant ladite protubérance. La protubérance 30 est préférentiellement située axialement entre l'extrémité de la face radialement intérieure dudit appui S axialement la plus proche du siège 13' et le milieu de ladite face. La distance axiale Vₓ séparant l'axe moyen de la protubérance 30, qui est aussi axe moyen de la rainure 110, de l'extrémité de la zone d'appui 112 située du côté extérieur du véhicule, est comprise entre 0,1 et 0,2 fois la largeur axiale 1 de l'appui S, d'une part pour avoir un meilleur centrage de l'appui sur la zone 112 et d'autre part pour minimiser la longueur déplacement sous effort de compression de la protubérance de l'appui, bien que l'élasticité circonférentielle de la protubérance 30 permette un enfilage facile de l'appui sur la portée 11.

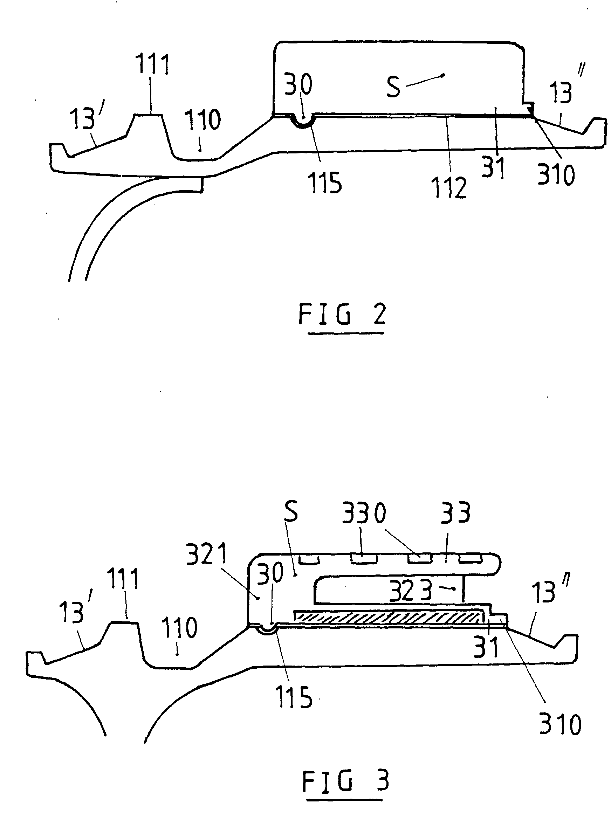

La jante 10 montrée sur la figure 2 diffère principalement de la jante de la figure 1 par l'absence de la gorge 12 de montage du bourrelet de pneumatique appelé à être monté sur le deuxième siège de jante 13" du côté intérieur du véhicule. La deuxième zone d'appui 112 de la portée de jante 11 s'étend alors de l'extrémité axialement intérieure de la rainure circonférentielle 110 à l'extrémité axialement intérieure du deuxième siège de jante 13". De même que dans l'exemple de la figure 1, ladite portée 11 est munie d'une rainure circonférentielle 115 de forme méridienne identique à la précédente, dans laquelle viendra se loger la protubérance 30 de l'appui S, appui qui d'une part sert de moyen de mise en place et d'autre part de butée au bourrelet de pneumatique qui est monté sur le deuxième siège de jante 13". L'appui S est ainsi muni sur sa base 31 d'une protubérance 310 qui peut être circonférentiellement continue ou discontinue. Ledit ensemble, du fait de la face radialement inférieure de la jante 10 moins tourmenté que la jante précédente, permet d'éviter les rétentions d'eau à l'intérieur de la cavité de jante.

Dans le cas d'un ensemble où la jante 10 est dépourvue de gorge de montage de bourrelet, il est avantageux que l'appui de soutien S de bande de roulement (figure 3) soit allégé par lui-même. Un appui S, tel que décrit dans la demande FR 98/14244, avec une base 31 renforcée par des éléments de renforcement circonférentiels, un corps d'appui 32 comprenant d'une part une portion pleine 321 et d'autre part une portion évidée 322 avec cloisons radiales 323, et un sommet 33 pourvu de rainures circonférentielles 330, permet, lorsque la portion évidée est axialement la plus proche du deuxième siège de jante 13", d'avoir une portion d'appui pleine 321 centrée, donc pleinement efficace, tout en bloquant le deuxième bourrelet de pneumatique.

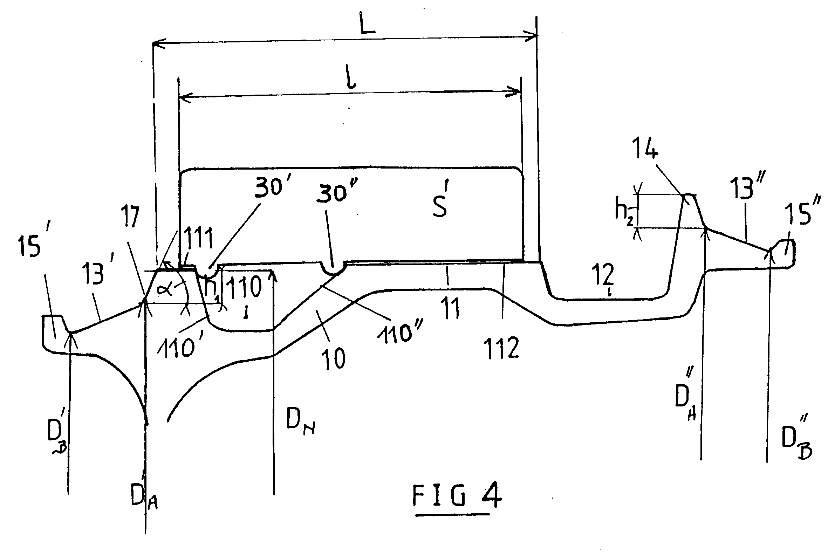

La figure 4 montre un ensemble conforme à l'invention et qui diffère de celui montré sur la figure 1 par le fait que l'appui de soutien S repose sur les deux zones d'appui 111 et 112 de la portée 11, et que la jante dudit ensemble ne comporte pas d'une part de butée de positionnement 16 de l'appui Set d'autre part de rainure circonférentielle 115. Il est en effet, pour des jantes obtenues par emboutissage d'une tôle d'acier, très difficile, pour ne pas dire impossible, de prévoir et réaliser de tels contours ou formes. Le maintien axial de l'appui S sur la jante de l'ensemble se fait alors au moyen de deux protubérances 30' et 30" de l'appui S, chaque protubérance étant en contact et venant en butée avec une paroi latérale de la première rainure circonférentielle 110, la protubérance 30' sur la paroi axialement extérieure 110' et la protubérance 30" sur la paroi axialement intérieure 110". Les protubérances 30' et 30" ont des dimensions égales aux dimensions de la protubérance 30 montrée sur la figure1.

## Revendications

1. Ensemble, formé d'une jante (10) comprenant un premier siège (13') et un second siège (13") de jante et d'un appui de soutien S de bande de roulement, déformable élastiquement, inextensible circonférentiellement, enfilable sur une portée de jante (11), et ayant une paroi radialement intérieure en regard de et concentrique à la paroi radialement extérieure de ladite portée (11), ladite portée prolongeant axialement vers l'intérieur, c'est-à-dire vers le second siège de jante (13"), le premier siège de jante (13'), et dont le diamètre moyen D_{N} est au moins égal au diamètre de toute partie de la jante (10) entre l'extrémité de ladite portée (11) axialement adjacente au premier siège (13') et l'extrémité d'une saillie ou hump (15') de faible hauteur prolongeant axialement le premier siège de jante (13'), ledit premier siège de jante (13') étant incliné vers l'extérieur, c'est-à-dire un siège de jante ayant une génératrice dont l'extrémité axialement extérieure à la jante est sur un cercle de diamètre D'_{B} inférieur au diamètre D'_{A} du cercle sur lequel se trouve l'extrémité axialement intérieure, un deuxième siège de jante (13") ayant, vu en section méridienne, une génératrice dont l'extrémité axialement intérieure est sur un cercle de diamètre D"_{A} supérieur au diamètre D'_{A} du cercle sur lequel se trouve l'extrémité axialement intérieure du premier siège de jante (13'), le premier siège de jante (13') étant axialement prolongé par une partie tronconique (17) définie par l'extrémité circulaire, de diamètre D'_{A}, axialement intérieure dudit premier siège (13') d'une part et par l'extrémité axialement adjacente du premier siège de jante (13') de diamètre D_{N} de la portée de jante (11) d'autre part, le diamètre D_{N} étant supérieur au diamètre D'_{A}, ladite partie tronconique (17) ayant, vue en section méridienne, une génératrice faisant avec l'axe de rotation un angle α, ouvert axialement vers le deuxième siège de jante (13") et radialement vers l'extérieur, l'appui de soutien S ayant une largeur axiale 1 inférieure à la largeur L de la portée de jante, **caractérisé en ce qu'**une des parois en regard est pourvue d'au moins une rainure circonférentielle (110, 115) dans laquelle est disposée au moins une protubérance (30, 30', 30")de l'autre paroi en regard, , de sorte que les faces latérales de la protubérance(s) (30) ou des protubérances (30', 30") soient axialement en contact avec deux faces latérales de rainure circonférentielle (110, 115) et **en ce que** le diamètre D_{N} est supérieur au diamètre D'_{A} d'une quantité au moins égale à 0,02 D_{N}, et **en ce que** ledit angle α est au moins égal à 45°.

2. Ensemble selon la revendication 1, **caractérisé en ce que** la(les) protubérance(s) (30, 30', 30") sont sur la paroi intérieure de l'appui S.

3. Ensemble selon la revendication 2, **caractérisé en ce que** la portée de jante (11) est constituée de deux zones d'appui (111, 112) séparées par une première rainure circonférentielle (110) de largeur *l*₁, la zone d'appui (112) la plus proche axialement du deuxième siège de jante (13") étant pourvue d'une deuxième rainure circonférentielle (115) dont l'extrémité la plus proche axialement du deuxième siège (13") est pourvue d'une saillie ou butée de positionnement (16), la rainure (115), dans laquelle vient se loger la protubérance (30) de l'appui S, et la butée (16) étant destinées à éviter le déplacement axial dudit appui de soutien S de bande de roulement qui sera disposé sur la portée de jante (11).

4. Ensemble selon la revendication 3, **caractérisé en ce que** la jante (10) comprend une gorge de montage (12) prolongeant axialement vers l'intérieur de la jante un rebord (14) qui prolonge lui-même le deuxième siège de jante (13").

5. Ensemble selon la revendication 3, **caractérisé en ce que** la zone d'appui axialement intérieure (112) se prolonge axialement jusqu'à l'extrémité axialement intérieure du deuxième siège de jante (13").

6. Ensemble selon la revendication 3, **caractérisé en ce que** la largeur axiale 1 de l'appui S de soutien de bande de roulement est supérieure à la largeur axiale 11 de la rainure ( 110).

7. Ensemble selon la revendication 2, **caractérisé en ce que** la portée de jante (11) est constituée de deux zones d'appui (111, 112) séparées par une première rainure circonférentielle (110) de largeur *l*₁, l'appui de soutien S de bande de roulement étant muni de deux protubérances (30', 30") en contact et venant en butée avec les deux parois latérales (110', 110") respectivement de la première rainure circonférentielle (110).

## Patentansprüche

1. Anordnung, die aus einer Felge (10), die einen ersten Felgensitz (13') und einen zweiten Felgensitz (13") umfaßt, und einer Laufflächen-Unterstützungsvorrichtung S gebildet ist, die elastisch verformbar ist, in Umfangsrichtung undehnbar ist, über einen Felgenbereich (11) aufziehbar ist und eine radial innere Wand hat, die der radial äußeren Wand des genannten Bereichs (11) gegenüberliegt und zu ihr konzentrisch ist, wobei der genannte Bereich axial nach innen, das heißt, zum zweiten Felgensitz (13") hin, den ersten Felgensitz (13') verlängert, und wovon der mittlere Durchmesser D_{N} mindestens gleich ist dem Durchmesser jedes Teils der Felge (10) zwischen dem Ende des genannten Bereichs (11), das axial dem ersten Sitz (13') benachbart ist, und dem Ende eines Vorsprungs oder Hump (15') mit geringer Höhe, der axial den ersten Felgensitz (13') verlängert, der erste Felgensitz (13') nach außen geneigt ist, das heißt, ein Felgensitz, der eine Erzeugende hat, deren bezüglich der Felge axial äußeres Ende auf einem Kreis mit einem Durchmesser D'_{B} liegt, der kleiner ist als der Durchmesser D'_{A} des Kreises, auf dem sich das axial innere Ende befindet, ein zweiter Felgensitz (13"), im Meridianschnitt gesehen, eine Erzeugende hat, deren axial inneres Ende auf einem Kreis mit einem Durchmesser D"_{A} liegt, der größer ist als der Durchmesser D'_{A} des Kreises, auf dem sich das axial innere Ende des ersten Felgensitzes (13') befindet, der erste Felgensitz (13') axial durch einen kegelstumpfförmigen Teil (17) verlängert ist, der einerseits durch das kreisförmige, axial innere Ende des genannten, ersten Sitzes (13') mit dem Durchmesser D'_{A} und andererseits durch das axial dem ersten Felgensitz (13') benachbarte Ende des Felgenbereichs 11 mit dem Durchmesser D_{N} definiert ist, der genannte, kegelstumpfförmige Teil (17), im Meridianschnitt gesehen, eine Erzeugende hat, die mit der Drehachse einen Winkel α einschließt, der axial zum zweiten Felgensitz (13") hin und radial nach außen offen ist, und die Unterstützungsvorrichtung S eine axiale Breite 1 hat, die kleiner ist als die Breite L des Felgenbereichs, **dadurch gekennzeichnet, daß** eine der gegenüberliegenden Wände mit mindestens einer Umfangsnut (110, 115) versehen ist, in der mindestens eine Ausstülpung (30, 30', 30") der anderen, gegenüberliegenden Wand derart angeordnet ist, daß die Seitenflächen der Ausstülpung(en) (30) oder der Ausstülpungen (30', 30") axial in Berührung mit den beiden Seitenflächen der Umfangsnut (110, 115) stehen, daß der Durchmesser D_{N} um ein Maß von mindestens 0,02 D_{N} größer ist als der Durchmesser D'_{A} , und daß der genannte Winkel α mindestens 45° beträgt.

2. Anordnung nach Anspruch 1, **dadurch gekennzeichnet, daß** die Ausstülpung(en) (30, 30', 30") auf der Innenwand der Unterstützung S liegen.

3. Anordnung nach Anspruch 2, **dadurch gekennzeichnet, daß** der Felgenbereich (11) von zwei Unterstützungszonen (111, 112) gebildet ist, die durch eine erste Umfangsnut (110) mit der Breite l₁ getrennt sind, wobei die Unterstützungszone (112), die dem zweiten Felgensitz (13") axial nächstgelegen ist, mit einer zweiten Umfangsnut (115) versehen ist, deren Ende, das axial dem zweiten Sitz (13") nächstgelegen ist, mit einem Vorsprung oder Positionierungsanschlag (16) versehen ist, und die Nut (115), in die die Ausstülpung (30) der Unterstützung S zur Auflage gelangt, und der Anschlag (16) dazu bestimmt sind, die axiale Versetzung der genannten Laufflächen-Unterstützungsvorrichtung S zu verhindern, die auf dem Felgenbereich (11) zur Anordnung kommt.

4. Anordnung nach Anspruch 3, **dadurch gekennzeichnet, daß** die Felge (10) eine Montageauskehlung (12) aufweist, die einen Randumschlag (14) axial zur Innenseite der Felge verlängert, der seinerseits den zweiten Felgensitz (13") verlängert.

5. Anordnung nach Anspruch 3, **dadurch gekennzeichnet, daß** sich die axial innere Unterstützungszone (112) axial bis zum axial inneren Ende des zweiten Felgensitzes (13") verlängert.

6. Anordnung nach Anspruch 3, **dadurch gekennzeichnet, daß** die axiale Breite 1 der Laufflächen-Unterstützungsvorrichtung S größer ist als die axiale Breite l₁ der Nut (110).

7. Anordnung nach Anspruch 2, **dadurch gekennzeichnet, daß** der Felgenbereich (11) von zwei Unterstützungszonen (111, 112) gebildet ist, die von einer ersten Umfangsnut (110) mit der Breite l₁ getrennt sind, wobei die Laufflächen-Unterstützungsvorrichtung S mit zwei Ausstülpungen (30', 30") versehen ist, die mit den beiden Seitenwänden (110', 110") der ersten Umfangsnut (110) in Berührung stehen und gegen sie anliegen.

## Claims

1. An assembly, formed of a rim (10) comprising a first (13') and a second (13") rim seat and an elastically deformable, circumferentially inextensible tread bearing support S which can be slipped on to a rim bearing surface (11), and having a radially inner wall opposite and concentric to the radially outer wall of said bearing surface (11), said bearing surface extending the first rim seat (13') axially towards the inside, that is to say, towards the second rim seat (13"), and the mean diameter D_{N} of which is at least equal to the diameter of any part of the rim (10) between the end of said bearing surface (11) axially adjacent to the first seat (13') and the end of a protrusion or hump (15') of low height axially extending the first rim seat (13'), said first rim seat (13') being inclined towards the outside, that is to say a rim seat having a generatrix the end of which which is axially external to the rim is located on a circle of diameter D'_{B} less than the diameter D'_{A} of the circle on which is located the axially inner end, a second rim seat (13") having, viewed in meridian section, a generatrix the axially inner end of which is on a circle of diameter D"_{A} greater than the diameter D'_{A} of the circle on which is located the axially inner end of the first rim seat (13'), the first rim seat (13') being axially extended by a frustoconical portion (17) defined by the circular, axially inner, end, of diameter D'_{A}, of said first seat (13') on one hand and by the axially adjacent end of the first rim seat (13') of diameter D_{N} of the rim bearing surface (11) on the other hand, the diameter D_{N} being greater than the diameter D'_{A}, said frustoconical portion (17) having, viewed in meridian section, a generatrix forming with the axis of rotation an angle α, open axially towards the second rim seat (13") and radially towards the outside, the bearing support S having an axial width I less than the width L of the rim bearing surface, **characterised in that** one of the facing walls is provided with at least one circumferential groove (110, 115) in which is arranged at least one protuberance (30, 30', 30") of the other facing wall, such that the lateral faces of the protuberance(s) (30) or of the protuberances (30', 30") are axially in contact with two lateral faces of the circumferential groove (110, 115) and **in that** the diameter D_{N} is greater than the diameter D'_{A} by an amount at least equal to 0.02 D_{N}, and **in that** said angle α is at least equal to 45°.

2. An assembly according to Claim 1, **characterised in that** the protuberance(s) (30, 30', 30") are on the inner wall of the support S.

3. An assembly according to Claim 2, **characterised in that** the rim bearing surface (11) is formed of two bearing zones (111, 112) separated by a first circumferential groove (110) of width I₁, the bearing zone (112) axially closest to the second rim seat (13") being provided with a second circumferential groove (115), the end of which which is axially closest to the second seat (13") is provided with a protrusion or positioning stop (16), the groove (115), in which the protuberance (30) of the support S becomes lodged, and the stop (16) being intended to prevent the axial displacement of said tread bearing support S which will be arranged on the rim bearing surface (11).

4. An assembly according to Claim 3, **characterised in that** the rim (10) comprises a mounting groove (12) extending axially towards the inside of the rim a flange (14) which in turn extends the second rim seat (13").

5. An assembly according to Claim 3, **characterised in that** the axially inner bearing zone (112) is extended axially as far as the axially inner end of the second rim seat (13").

6. An assembly according to Claim 3, **characterised in that** the axial width I of the tread bearing support S is greater than the axial width I₁ of the groove (110).

7. An assembly according to Claim 2, **characterised in that** the rim bearing surface (11) is formed of two bearing zones (111, 112) separated by a first circumferential groove (110) of width I₁, the tread bearing support S being provided with two protuberances (30', 30") which are in contact and butt up against the two lateral walls (110', 110") respectively of the first circumferential groove (110).
